# FASCICULE DE BREVET EUROPEEN

(11) **EP 2 112 351 B1**
(45) Date de publication et mention de la délivrance du brevet: **30.03.2011**
(21) Numéro de dépôt: 09290278.2
(22) Date de dépôt: 16.04.2009
(51) Int. Cl.: F02B 71/06, F02C 5/08, F02K 7/02

(54) **Moteur à détonations pulsées**
Pulsierender Detonationsmotor
Pulsed detonation engine

(30) Priorité: 21.04.2008 FR 0802210
(43) Date de publication de la demande: 28.10.2009
(73) Titulaire: MBDA France, 75016 Paris (FR)
(72) Inventeur: Daniau, Emeric, 18400 St Florent sur Cher (FR); Falempin, François, 78730 Saint-Arnoult (FR); Bobo, Etienne, 18000 Bourges (FR); Minard, Jean-Pierre, 18340 Soye en Septaine (FR)
(74) Mandataire: Bonnetat, Christian

(56) Documents cités:
- EP-A- 1 482 162
- FR-A- 1 076 384
- US-A1- 2005 279 078
- US-A1- 2006 254 252
- US-A1- 2007 180 810

## Description

La présente invention concerne un moteur à détonations pulsées fonctionnant avec un mélange détonant combustible-air.

Ce type de moteur trouve des applications notamment, quoique non exclusivement, dans les domaines aéronautiques spatial et militaire pour équiper des aéronefs, fusées, missiles, etc ...

Le cycle de fonctionnement d'un tel moteur peut être réduit aux trois temps suivants :
- un premier temps relatif à la phase d'alimentation du moteur en mélange détonant ;
- un deuxième temps relatif à la phase de détonation assurant la compression et la libération de l'énergie chimique engendrée par le mélange ; et
- un troisième temps relatif à la phase de détente des produits de détonation.

Le déroulement des différentes phases du cycle de fonctionnement du moteur est un point potentiellement critique et, en particulier, la maîtrise des phases d'alimentation et de détonation qui peuvent influer très fortement sur les performances d'un tel moteur.

On connaît déjà, par le brevet EP 1 482 162, un moteur à détonations pulsées dont la structure est définie par un tube de flamme fermé à une extrémité par un fond transversal mobile (désigné mur de poussée) où prennent appui les produits issus de la détonation du mélange détonant pour engendrer la poussée. Un tel moteur impose le fonctionnement des deux phases d'alimentation et de détonation du moteur, par sa mobilité, en ouvrant et fermant la lumière d'admission ce qui permet de s'affranchir de dispositifs d'alimentation complexes à vannes ou analogues.

La présente invention a pour objet de perfectionner le moteur à détonations pulsées précité en minimisant, lors de la phase de détonation, le blocage de l'écoulement du flux d'air provenant de l'entrée d'air pour limiter la traînée engendrée par l'entrée d'air.

A cette fin, selon l'invention, le moteur à détonations pulsées fonctionnant avec un mélange détonant combustible-air et comportant :
- au moins un tube de flamme à fond transversal mobile par rapport à celui-ci pour pouvoir occuper deux positions limites, une première position correspondant à la phase de détonation du mélange détonant dans la chambre de combustion et une seconde position correspondant à la phase d'alimentation de ladite chambre ;
- au moins une lumière d'admission du mélange détonant ménagée dans la paroi latérale dudit tube de flamme ;
est remarquable en ce que :
- ledit moteur comporte une enveloppe externe autour dudit tube de flamme définissant un espace annulaire périphérique le long de la paroi latérale dudit tube de flamme qui permet l'écoulement du flux d'air provenant de l'entrée d'air dudit moteur ;
- des guides fixes d'écoulement sont disposés dans l'espace annulaire périphérique afin de définir des canaux d'écoulement d'air dans cet espace ; et
- au moins un plot mobile disposé dans l'espace annulaire et lié audit fond mobile, est prévu pour se déplacer le long de la paroi latérale dudit tube de flamme, ledit plot mobile étant apte à obturer, quand ledit fond mobile occupe la seconde position, un desdits canaux d'écoulement pour orienter une partie du flux d'air en direction de ladite lumière d'admission et libérer ledit canal d'écoulement lorsque ledit fond est dans la première position.

Ainsi, grâce à l'invention, le blocage de l'écoulement du flux d'air en provenance de l'entrée d'air est minimisé durant la phase de détonation puisque le flux d'air peut circuler dans les canaux d'écoulement de l'espace annulaire en contournant les plots mobiles lorsque la ou les lumières d'admission sont obturées, ce qui a pour effet de limiter la traînée engendrée par l'entrée d'air.

De plus, le moteur s'affranchit de dispositifs de commande complexes du ou des plots mobiles, puisque c'est le fond transversal qui impose le déplacement des plots mobiles par sa mobilité.

La structure du moteur permet également d'alimenter une tuyère cylindrique, par exemple de type éjecteur, concentrique à la chambre de combustion et ainsi bénéficier des avantages d'un moteur à double flux.

Avantageusement, lesdits guides fixes peuvent être disposés parallèlement les uns par rapport aux autres de façon concentrique autour de la paroi latérale dudit tube de flamme. Ainsi, les canaux d'écoulement de l'espace annulaire sont parallèles les uns par rapport aux autres ce qui facilite l'écoulement du flux d'air, lors de la phase de détonation, le long de la paroi latérale du tube de flamme.

Par exemple, le déplacement dudit plot mobile peut être un coulissement latéral le long de la paroi latérale dudit tube de flamme.

En outre, ledit plot mobile peut avantageusement rejoindre la face externe des extrémités en regard de deux guides fixes adjacents de sorte à obturer le canal d'écoulement formé en partie par ces deux guides fixes, quand ledit fond mobile occupe la seconde position.

De plus, ledit fond mobile, qui coulisse entre la première et la seconde position, peut présenter avantageusement la forme d'un piston à paroi transversale tournée vers ladite chambre et à jupe latérale coopérant avec la paroi dudit tube de flamme, et une couronne, comprenant au moins une ouverture d'alimentation en mélange détonant ménagée sur sa paroi latérale, peut alors être solidaire de la paroi transversale dudit piston et coopérer avec la paroi latérale dudit tube de flamme pour obturer au moins partiellement ladite lumière d'admission dans la seconde position dudit fond mobile.

De préférence, au moins une première lumière d'admission; présentant un orifice d'écoulement de section fixe, est obturée dans la première position dudit fond mobile et dégagée dans la seconde position dudit fond et au moins une seconde lumière d'admission, apte à recevoir une saillie mobile, présente un orifice d'écoulement à section variable, ledit orifice présentant une section réduite dans la première position dudit fond mobile et une section élargie dans la seconde position dudit fond.

Ledit moteur à détonations pulsées peut comporter avantageusement au moins un tube de prédétonation disposé latéralement par rapport à ladite chambre de combustion, au moins approximativement le long de celle-ci, ce qui facilite l'alimentation en air et en combustible du ou des tubes de prédétonation.

De plus, une saillie mobile peut être engagée dans ladite seconde ouverture et rejoindre la face interne des extrémités d'un desdits guides fixes, lorsque ledit fond mobile occupe la première position, de sorte à former un passage transversal mettant en communication fluidique ledit tube de prédétonation et ladite chambre de combustion pour permettre notamment le transfert des ondes de déflagration, et une des extrémités dudit passage transversal correspond alors audit orifice d'écoulement de ladite seconde lumière d'admission présentant une section réduite, quand ledit fond mobile occupe la première position, et l'autre extrémité correspond à l'orifice amont, orientée vers l'entrée d'air, dudit tube de prédétonation.

Dans un mode de réalisation avantageux de la présente invention, le moteur à détonations pulsées comporte une pluralité, au moins égale à deux, de tubes de prédétonation en positions latérales diamétralement opposées par rapport à ladite chambre de combustion. Ainsi, le moteur présente une bien meilleure robustesse qu'un moteur à tube de prédétonation unique, notamment en améliorant sensiblement la propagation de la détonation dans la chambre.

Selon une autre caractéristique avantageuse, au moins un desdits guides fixes peut présenter la forme d'une fourche à dents orientées vers l'entrée d'air pour, lors de phase d'alimentation, orienter le flux d'air vers une ou plusieurs lumières d'admission dégagées.

De plus, des moyens élastiques de rappel sont prévus dans ledit tube de flamme pour ramener ledit fond mobile de la première position à la seconde position. Ces moyens élastiques de rappel comportent par exemple au moins un ressort agissant sur la paroi transversale dudit fond.

Les figures du dessin annexé feront bien comprendre comment l'invention peut être réalisée. Sur ces figures, des références identiques désignent des éléments semblables.

La figure 1 est une vue schématique approchée en coupe longitudinale d'un exemple de réalisation du moteur à détonations pulsées conforme à l'invention, montrant le fond mobile dans la première position. Par soucis de clarté, les plots mobiles, la saillie mobile, les ouvertures de guidages et la lumière d'admission, dissimulés derrière la couronne du piston, sont représentés, selon une vue développée approchée, en traits discontinus. Les guides fixes et le tube de prédétonation, masqués par la paroi latérale du tube de flamme sont, quant à eux, représentés en lignes fantômes.

La figure 2 est une vue analogue à la figure 1 montrant le fond mobile dans la seconde position.

Les figures 3 et 4 représentent, schématiquement, une vue développée de la surface latérale extérieure du tube de flamme, respectivement dans les première et seconde positions du fond mobile.

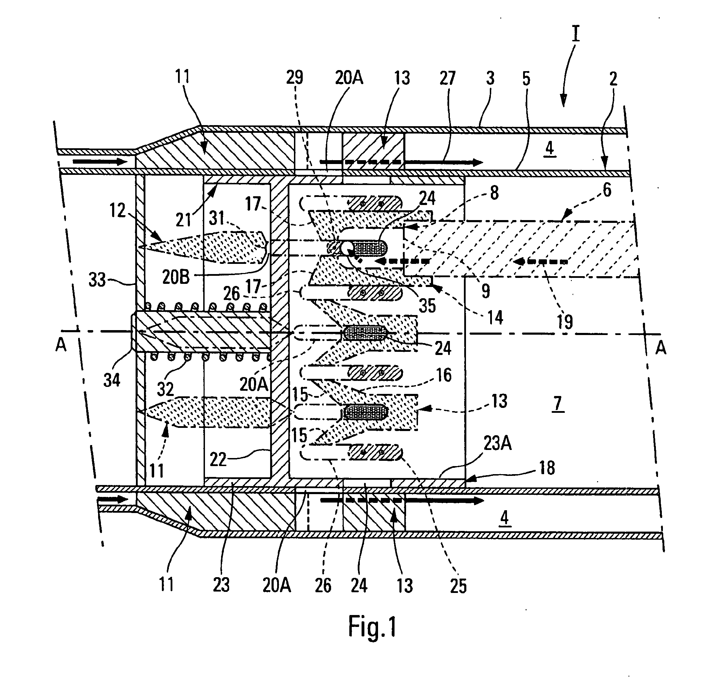

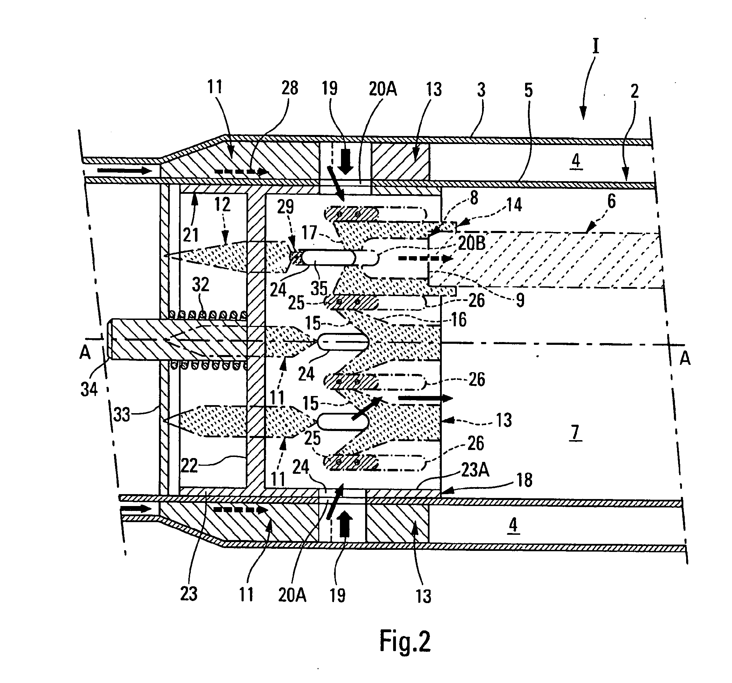

Selon un exemple préféré de réalisation conforme à l'invention, le moteur à détonations pulsées, représenté schématiquement et partiellement sur les figures 1 et 2, comprend un tube de flamme 2 cylindrique à axe longitudinal A et une enveloppe externe 3 qui recouvre le tube de flamme 2 et définit un espace annulaire périphérique 4 le long de la paroi latérale 5 dudit tube 2.

De plus, le moteur I comprend, dans ce mode préféré de réalisation, deux tubes de prédétonation 6, mais leur nombre pourrait être différent, disposés latéralement par rapport à la chambre de combustion 7 du tube de flamme 2, dans des positions diamétralement opposées par rapport à celle-ci. Dans cette réalisation, l'extrémité avant 8, orientée vers l'entrée d'air, des tubes de prédétonation 6 (à gauche sur les figures 1 et 2) débouche dans l'espace annulaire périphérique 4 par un orifice 9, alors que l'extrémité aval desdits tubes 6 (non représentée sur les figures) est ouverte sur l'extérieur. Chaque tube de prédétonation 6 peut comporter un dispositif d'amorçage central (non représenté sur les figures) permettant un maintien suffisamment long de la pression au niveau de l'extrémité avant 8 du tube 6 après une déflagration.

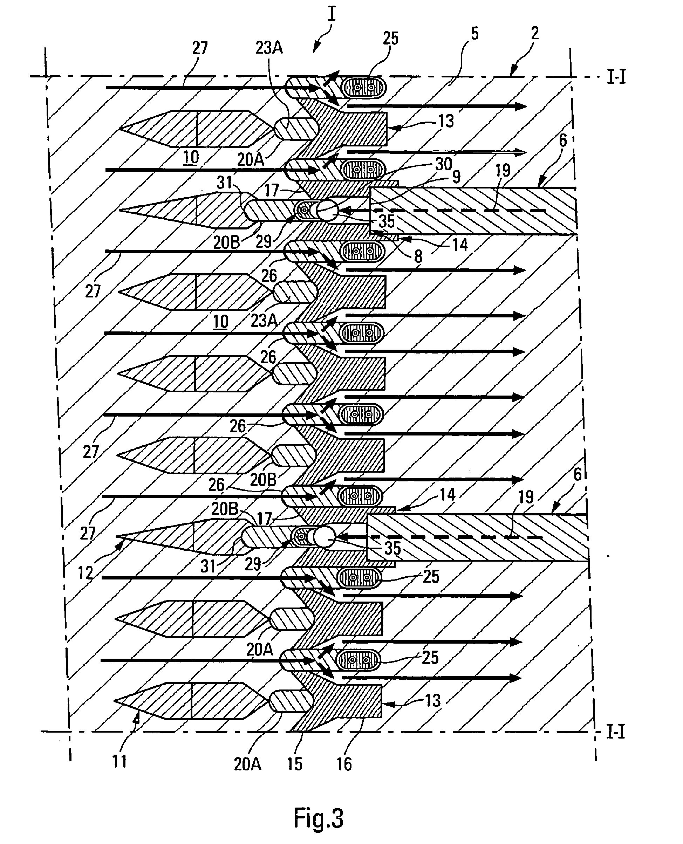

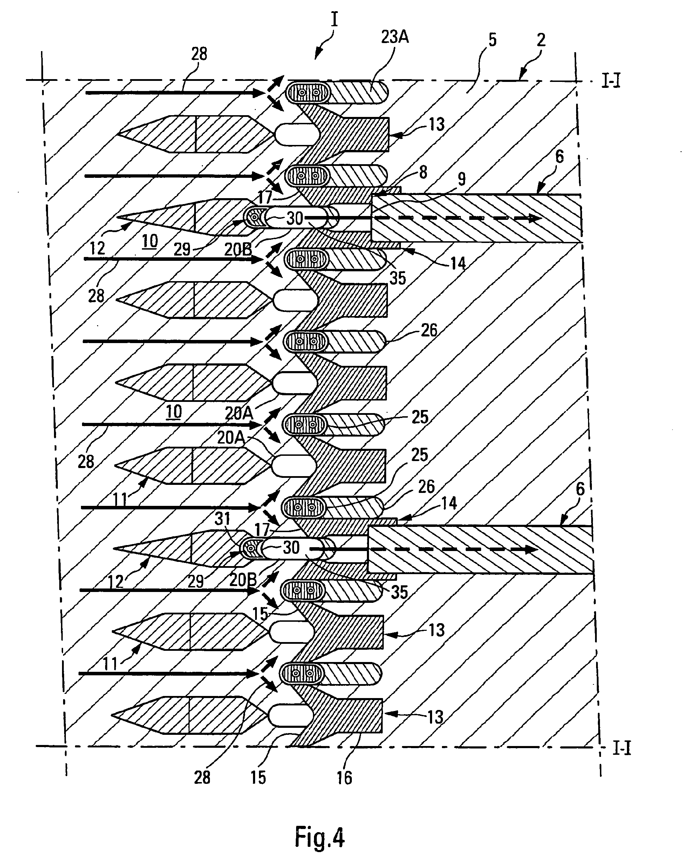

En outre, selon l'invention et comme le montrent les figures 3 et 4, des guides d'écoulement 11, 12, 13 et 14 sont fixés, de préférence de manière concentrique, sur la paroi latérale 5 du tube de flamme 2 dans l'espace annulaire 4 de façon à former, dans cet espace, des canaux d'écoulement parallèles 10 le long du tube de flamme 2. Chaque canal d'écoulement 10 est par exemple délimité par deux couples de guides, un couple de guides comprenant un guide aval 13 ou 14 (à droite sur les figures 3 et 4) et un guide amont associé 19 ou 12 (à gauche sur ces mêmes figures). Selon cette réalisation préférée, certains guides aval 13, désignés premiers guides, peuvent présenter la forme d'une fourche 16 à deux dents 15 tournées vers le guide amont 11 associé, désigné troisième guide. D'autres guides aval 14, désignés seconds guides, notamment destinés à être disposés devant l'orifice amont 9 des tubes de prédétonation 6, peuvent comporter deux branches parallèles 17 indépendantes dont les extrémités saillantes sont orientées vers le guide amont associé 12, désigné quatrième guide.

Le moteur I comprend également un fond transversal 18 logé avec ajustement à l'intérieur du tube de flamme 2. Ce fond transversal 18 délimite, avec la paroi latérale 5 du tube de flamme 2, la chambre de combustion 7 apte à recevoir cycliquement une charge combustible, symbolisée par la flèche 19 sur la figure 2, issue d'un dispositif d'alimentation, présent dans l'espace annulaire mais non représenté sur les figures, fournissant le mélange détonant combustible-air. Le fond transversal 18 définit un mur de poussée contre lequel s'appliquent les produits de détonation du mélange détonant pour engendrer la poussée.

Selon le mode préféré de réalisation, le fond transversal 18 est monté mobile, mais non exclusivement, par rapport au tube de flamme 2 du moteur I et peut se déplacer entre deux positions limites distinctes, une première position (figures 1 et 3) isolant la chambre de combustion 7 de l'espace annulaire périphérique 4, correspondant à la phase de détonation du mélange détonant, et une seconde position (figures 2 et 4) mettant en communication fluidique la chambre de combustion 7 et l'espace annulaire périphérique 4, correspondant à la phase d'alimentation de la chambre en mélange détonant.

Pour cela, des premières lumières 20A pour l'admission du mélange détonant dans la chambre 7, présentant un orifice d'écoulement de section fixe, sont ménagées dans la paroi latérale 5 du tube de flamme 2, avantageusement entre les dents 15 des premiers guides 13, lesquelles premières lumières d'admission 20A sont entièrement obturées, quand le fond transversal mobile 18 est dans sa première position, et dégagées, lorsqu'il occupe sa seconde position.

Des secondes lumières d'admission 20B sont également pratiquées dans la paroi latérale 5 du tube de flamme 2 entre les branches 1 7 des seconds guides 14. Ces secondes lumières d'admission 20B ont la particularité de présenter un orifice d'écoulement de fluide 35 à section variable, lequel orifice d'écoulement 35 présente une section réduite, dans la première position du fond mobile 18, permettant le transfert des ondes de déflagration des tubes de prédétonation 6 vers la chambre de combustion 7 par un passage transversal (décrit plus en détail par la suite) et une section élargie, dans la seconde position du fond mobile 18, pour permettre l'alimentation en mélange détonant de la chambre de combustion 7 et des tubes de prédétonation 6.

Comme le montrent les figures 1 et 2, le déplacement du fond mobile 18 entre ses deux positions est, dans ce mode préféré de réalisation, du type coulissant selon l'axe longitudinal A, mais il pourrait en être autrement (par exemple de type hélicoïdal).

Dans la réalisation illustrée, le fond mobile 18 se présente structurellement sous la forme d'un piston 21 composé d'une paroi transversale 22 tournée vers la chambre de combustion 7 à jupe latérale 23 coopérant, avec ajustement, avec la paroi latérale 5 du tube de flamme 2. Le fond mobile 18 comprend également une couronne 23A solidaire de la paroi transversale 22 du piston 21 et qui coopère, avec ajustement, avec la paroi latérale 5 du tube de flamme 2 pour obturer totalement les premières lumières d'admission 20A et partiellement les secondes lumières d'admission 20B présentant un orifice d'écoulement 35 de section réduite, lorsque le fond mobile 18 occupe la seconde position.

Des ouvertures latérales d'alimentation 24 sont pratiquées dans la paroi latérale de la couronne 23A du piston 21. Ces ouvertures d'alimentation 24 communiquent avec les premières 20A et secondes 20B lumières d'admission, quand le fond mobile 18 occupe la seconde position, pour mettre en communication fluidique l'espace annulaire 4 et la chambre de combustion 7 lors de la phase d'alimentation.

De plus, selon l'invention, des plots mobiles 25 sont disposés à l'intérieur des canaux d'écoulement 10 entre les premiers 13 et seconds 14 guides et sont fixés, préférentiellement de façon concentrique, sur la couronne 23A du piston 21. Ces plots mobiles 25 sont prévus, selon l'invention, pour coulisser latéralement dans des ouvertures de guidage 26 pratiquées dans la paroi latérale 5 du tube de flamme 2, mais d'autres types de déplacement des plots 25 pourraient être envisageables. De cette façon, comme le montre la figure 3, chaque plot mobile 25 est décalé, vers la droite sur la figure 3, par rapport aux extrémités des dents 15 des premiers guides 13 et des branches 17 des seconds guides 14, lorsque le fond mobile 18 occupe la première position, de sorte que le flux d'air de l'entrée d'air, symbolisé par la flèche 27, puisse s'écouler librement dans les canaux d'écoulement 10 le long de la paroi du tube de flamme 2 en contournant les plots mobiles 25.

Comme illustré sur la figure 4, les plots mobiles 25 rejoignent, avec ajustement, la face externe des extrémités en regard des dents 15 et branches 17, quand le fond mobile 18 occupe la seconde position, de façon à obtenir les canaux d'écoulement 10 et orienter l'écoulement du flux d'air de l'entrée d'air, symbolisé par la flèche 28 sur les figures 2 et 4, en direction des premières lumières d'admission 20A dégagées et de l'orifice d'écoulement 35 de section élargie des secondes lumières d'admission 20B.

Par ailleurs, des saillies mobiles 29, échancrées sur leur face latérale aval 30, sont fixées sur la couronne 23A du piston 21 et peuvent coulisser, de préférence parallèlement aux plots mobiles 25, dans les secondes lumières d'admission 20B jouxtant les tubes de prédétonation 6. Comme le montre la figure 3, les saillies mobiles 29 rejoignent, avec ajustement, la face interne des extrémités des branches 17 en regard, dans la première position du fond mobile 18, et définissent ainsi un passage transversal permettant le transfert des ondes de déflagration des tubes de prédétonation 6 vers la chambre de combustion 7, une des extrémités du passage transversal correspondant à l'orifice d'écoulement 35 de section réduite et l'autre extrémité à l'orifice amont 9 des tubes de prédétonation 6.

Un logement 31 est prévu sur la face latérale aval des quatrièmes guides 12, disposés en regard des tubes de prédétonation 6, pour accueillir les saillies mobiles 29, quand le fond mobile 18 est dans la seconde position.

De plus, des moyens élastiques de rappel sont prévus entre le fond transversal mobile 18 et le tube de flamme 2, pour ramener spontanément ledit fond 18 de sa seconde position (figure 2) vers sa première position (figure 1). Par exemple, ces moyens sont simplement définis par un ressort de compression 32 disposé entre la face amont de la paroi transversale 22 du piston 21 opposée à la chambre de combustion 7, et un appui transversal 33 prévu dans le tube de flamme 2. De façon usuelle, une tige de guidage 34 du ressort 32 fixée sur la face amont de la paroi transversale 22 du piston 21 peut être associée audit ressort 32.

Le cycle de fonctionnement d'un tel moteur à détonations pulsées I décrit ci-dessus est le suivant.

Tout d'abord, on suppose que le moteur I se trouve dans la configuration, illustrée sur les figures 1 et 3, pour laquelle le fond transversal mobile 18 est dans sa première position, c'est-à-dire :
- les plots mobiles 25 sont décalés vers la droite sur la figure 3 pour permettre l'écoulement du flux d'air de l'entrée d'air le long de la paroi latérale 5 du tube de flamme 2 ;
- les saillies mobiles 29 rejoignent la face interne des extrémités des branches 17 en regard des seconds guides 14 pour former les passages transversaux permettant la communication fluidique entre les tubes de prédétonation 6 et la chambre de combustion 7. Les tubes de prédétonation 6 sont ainsi séparés de l'entrée du mélange détonant ; et
- les premières lumières d'admission 20A sont totalement obturées par la paroi latérale de la couronne 23A de sorte que la chambre de combustion 7 soit isolée de l'entrée du mélange détonant.

Sous l'impulsion des ondes de déflagrations engendrées dans les tubes de prédétonation 6 et de leur transmission via les passages transversaux, la détonation du mélange réactif comprimé se produit dans la chambre 7. La pression augmentant fortement dans la chambre 7, le fond mobile 18 se met en mouvement vers l'arrière (vers la gauche sur la figure 1) ce qui provoque simultanément l'ouverture des premières lumières d'admission 20A, l'élargissement de la section de l'orifice 35 des secondes lumières d'admission 20B et le coulissement des plots mobiles 25, vers les extrémités des dents 1 5 et branches 17, et des saillies mobiles 29, vers les logements 31 des quatrièmes guides 12.

La pression dans la chambre de combustion 7 est provisoirement tombée sous l'effet de la détente arrière des produits de détonation, mais sous l'effet de son inertie et de la vitesse acquise, le piston 21 continue de reculer à l'encontre du ressort 32 jusqu'à ce que le fond mobile 18 atteigne sa seconde position.

Lorsque le fond mobile 18 occupe la seconde position, les premières lumières d'admission 20A dégagées et les secondes lumières d'admission 20B, dont l'orifice 35 présente une section élargie, communiquent avec les ouvertures d'alimentation 24 de la couronne 23A. En outre, les plots mobiles 25 obturent les canaux d'écoulement 10 en rejoignant la face externe des extrémités des dents 15 et branches 17 en regard et les saillies mobiles 29 sont en butée dans leur logement respectif 31.

Ensuite, un phénomène d'auto-aspiration, résultant de la dépression provoquée par la surexpansion des produits de détonation, permet le remplissage autonome de la chambre de combustion 7 et des tubes de prédétonation 6 en mélange détonant combustible-air.

Puis sous l'action du ressort de compression 32, le fond mobile 18 est renvoyé vers la chambre de combustion 7, la couronne 23A du piston 21 obturant totalement les premières lumières d'admission 20A et partiellement les secondes lumières d'admission 20B, dont l'orifice 35 présente une section réduite, tandis que les plots mobiles 25 sont en butée des ouvertures de guidage 26 et les saillies mobiles 29 rejoignent la face interne des extrémités des branches 17 en regard.

Un nouveau cycle de fonctionnement du moteur I peut alors débuter.

## Revendications

1. Moteur à détonations pulsées fonctionnant avec un mélange détonant combustible-air et comportant :
- au moins un tube de flamme (2) à fond transversal mobile (18) par rapport à celui-ci pour pouvoir occuper deux positions limites, une première position correspondant à la phase de détonation du mélange détonant dans la chambre de combustion (7) dudit tube de flamme (2) et une seconde position correspondant à la phase d'alimentation de ladite chambre (7) ;
- au moins une lumière d'admission (20A, 20B) du mélange détonant ménagée dans la paroi latérale (5) dudit tube de flamme (2) ;
**caractérisé en ce que** :
- ledit moteur (I) comporte une enveloppe externe (3) autour dudit tube de flamme (2) définissant un espace annulaire périphérique (4) le long de la paroi latérale (5) dudit tube de flamme (2) qui permet l'écoulement du flux d'air provenant de l'entrée d'air dudit moteur ;
- des guides fixes d'écoulement (11, 12, 13, 14) sont disposés dans l'espace annulaire (4) périphérique afin de définir des canaux d'écoulement (10) dans cet espace ; et
- au moins un plot mobile (25) disposé dans l'espace annulaire (4) et lié audit fond mobile (18), est prévu pour se déplacer le long de la paroi latérale (5) dudit tube de flamme (2), ledit plot mobile (25) étant apte à obturer, quand ledit fond mobile (18) occupe la seconde position, un desdits canaux d'écoulement (10) pour orienter une partie du flux d'air en direction de ladite lumière d'admission (20A) et libérer ledit canal d'écoulement (10) lorsque ledit fond (18) est dans la première position.

2. Moteur selon la revendication 1,
**caractérisé en ce que** lesdits guides fixes (11, 12, 13, 14) sont disposés parallèlement les uns par rapport aux autres de façon concentrique autour de la paroi latérale (5) dudit tube de flamme (2).

3. Moteur selon l'une des revendications 1 ou 2,
**caractérisé en ce que** le déplacement dudit plot mobile (25) est un coulissement latéral le long de la paroi latérale (5) dudit tube de flamme (2).

4. Moteur selon l'une quelconque des revendications 1 à 3,
**caractérisé en ce que** ledit plot mobile (25) rejoint la face externe des extrémités en regard de deux guides fixes adjacents (13, 14) de sorte à obturer le canal d'écoulement (10) formé en partie par ces deux guides fixes, quand ledit fond mobile (18) occupe la seconde position.

5. Moteur selon l'une quelconque des revendications 1 à 4, **caractérisé en ce que** :
- ledit fond mobile (18), qui coulisse entre la première et la seconde position, présente la forme d'un piston (21) à paroi transversale (22) tournée vers ladite chambre (7) et à jupe latérale (23) coopérant avec la paroi (5) dudit tube de flamme (2) ; et
- une couronne (23A), comprenant au moins une ouverture d'alimentation (24) en mélange détonant ménagée sur sa paroi latérale, est solidaire de la paroi transversale (22) dudit piston (21) et coopère avec la paroi latérale (5) dudit tube de flamme (2) pour obturer au moins partiellement ladite lumière d'admission (20A, 20B) dans la seconde position dudit fond mobile (18).

6. Moteur selon l'une quelconque des revendications 1 à 5, **caractérisé en ce que** :
- au moins une première lumière d'admission (20A), présentant un orifice d'écoulement de section fixe, est obturée dans la première position dudit fond mobile (18) et dégagée dans la seconde position dudit fond (18);et
- au moins une seconde lumière d'admission (20B), apte à recevoir une saillie mobile (29), présente un orifice d'écoulement (35) à section variable, ledit orifice (35) présentant une section réduite dans la première position dudit fond mobile (18) et une section élargie dans la seconde position dudit fond (18).

7. Moteur selon l'une quelconque des revendications 1 à 6, **caractérisé en ce qu'**il comporte au moins un tube de prédétonation (6) disposé latéralement par rapport à ladite chambre de combustion (7), au moins approximativement le long de celle-ci.

8. Moteur selon la revendication 7 quand elle dépend de la revendication 6,
**caractérisé en ce que** :
- une saillie mobile (29) est engagée dans ladite seconde ouverture (20B) ;
- ladite saillie mobile (29) rejoint la face interne des extrémités d'un desdits guides fixes, lorsque ledit fond mobile (12) occupe la première position, de sorte à former un passage transversal mettant en communication fluidique ledit tube de prédétonation (6) et ladite chambre de combustion (7) pour permettre notamment le transfert des ondes de déflagration ; et
- une des extrémités dudit passage transversal correspond audit orifice d'écoulement (35) de ladite seconde lumière d'admission (20B) présentant une section réduite, quand ledit fond mobile (18) occupe la première position, et l'autre extrémité correspond à l'orifice amont (9), orientée vers l'entrée d'air, dudit tube de prédétonation (6).

9. Moteur selon l'une quelconque des revendications 1 à 8, **caractérisé en ce qu'**il comprend une pluralité, au moins égale à deux, de tubes de prédétonation (6) en positions latérales diamétralement opposées par rapport à ladite chambre de combustion (7).

10. Moteur selon l'une quelconque des revendications 1 à 9, **caractérisé en ce qu'**au moins un desdits guides fixes (13) présente la forme d'une fourche (16) à dents (15) orientées vers l'entrée d'air.

11. Moteur selon l'une quelconque des revendications 1 à 10, **caractérisé en ce que** des moyens élastiques de rappel sont prévus dans ledit tube de flamme (2) pour ramener ledit fond mobile (18) de la première position à la seconde position.

12. Moteur selon la revendication 11,
**caractérisé en ce que** lesdits moyens élastiques de rappel comportent au moins un ressort (32) agissant sur la paroi transversale (22) dudit fond (18).

## Claims

1. A pulse detonation engine operating with a detonating fuel-air mixture and comprising:
- at least one flame tube (2) with a transversal bottom (18) being mobile with respect to the latter so as to be able to occupy two limit positions, a first position corresponding to the detonation phase of the detonating mixture in the combustion chamber (7) of said flame tube (2) and a second position corresponding to the supply phase of said chamber (7);
- at least one intake port (20A, 20B) of the detonating mixture arranged in the side wall (5) of said flame tube (2);
**characterized in that**:
- said engine (I) comprises an external shell (3) around said flame tube (2) defining a peripheral ring space (4) along the side wall (5) of said flame tube (2) allowing the air flux to flow from the air intake of said engine;
- fixed flowing guides (11, 12, 13, 14) are arranged in the peripheral ring space (4) so as to define flowing channels (10) in such a space; and
- at least one mobile block (25) arranged in the ring space (4) and connected to said mobile bottom (18), is provided for moving along the side wall (5) of said flame tube (2), said mobile block (25) being able to obstruct, when said mobile bottom (18) occupies the second position, one of said flowing channels (10) so as to orient part of the air flow in the direction of said intake port (20A) and release said flowing channel (10) when said bottom (18) is in the first position.

2. An engine according to claim 1:
**characterized in that** said fixed guides (11, 12, 13, 14) are arranged parallel to each other in a concentric way around the side wall (5) of said flame tube (2).

3. An engine according to any of claims 1 or 2,
**characterized in that** the shift of said mobile block (25) is a lateral sliding along the side wall (5) of said flame tube (2).

4. An engine according to any of claims 1 to 3,
**characterized in that** said mobile block (25) joins the external face of the ends opposite two adjacent fixed guides (13, 14) so as to obstruct the flowing channel (10) partially formed by those two fixed guides, when said mobile bottom (18) occupies the second position.

5. An engine according to any of claims 1 to 4,
**characterised in that**:
- said mobile bottom (18), sliding between the first and the second position, has the shape of a piston (21) with a transversal wall (22) facing said chamber (7) and with a side skirt (23) cooperating with the wall (5) of said flame tube (2); and
- a crown (23A), comprising at least one detonating mixture supply opening (24) arranged on its side wall, is integral with the transversal wall (22) of said piston (21) and cooperates with the side wall (5) of said flame tube (2) for obstructing at least partially said intake port (20A, 20B) in the second position of said mobile bottom (18).

6. An engine according to any of claims 1 to 5,
**characterised in that**:
- at least one first intake port (20A), having a flowing hole with a fixed section, is obstructed in the first position of said mobile bottom (18) and released in the second position of said bottom (18); and
- at least one second intake port (20B), able to receive a mobile projection (29), has a flowing hole (35) with a variable section, said hole (35) having a reduced section in the first position of said mobile bottom (18) and an enlarged section in the second position of said bottom (18).

7. An engine according to any of claims 1 to 6,
**characterized in that** it comprises at least one pre-detonation tube (6) arranged laterally relative to said combustion chamber (7), at least approximately along the latter.

8. An engine according to claim 7 when depending on claim 6,
**characterized in that**:
- a mobile projection (29) is engaged into said second opening (20B) ;
- said mobile projection (29) joins the internal face of the ends of one of said fixed guides, when said mobile bottom (18) occupies the first position, so as to form a transversal passage putting in fluid communication said pre-detonation tube (6) and said combustion chamber (7) so as to allow, more particularly, the transfer of the explosion waves; and
- one of the ends of said transversal passage corresponds to said flowing hole (35) of said second intake port (20B) having a reduced section, when said mobile bottom (18) occupies the first position, and the other end corresponds to the upstream hole (9), oriented to the air intake, of said pre-detonation tube (6).

9. An engine according to any of claims 1 to 8,
**characterized in that** it comprises a plurality, at least two, of pre-detonation tubes (6) in lateral positions diametrically opposed with respect to said combustion chamber (7).

10. An engine according to any of claims 1 to 9,
**characterized in that** at least one of said fixed guides (13) has the shape of a fork (16) with teeth (15) oriented to the air intake.

11. An engine according to any of claims 1 to 10,
**characterized in that** return resilient means are provided in said flame tube (2) for bringing back said mobile bottom (18) from the first position to the second position.

12. An engine according to claim 11:
**characterized in that** said return resilient means comprise at least one spring (32) acting on the transversal wall (22) of said bottom (18).

## Patentansprüche

1. Pulsierender Detonationsmotor der mit einem Detonationsgemisch aus Kraftstoff-Luft funktioniert und Folgendes aufweist:
- mindestens ein Flammrohr (2) mit Querboden (18), der in Bezug zu diesem beweglich ist, um zwei Grenzpositionen einnehmen zu können, eine erste Position, die der Detonationsphase des Detonationsgemischs in der Brennkammer (7) des Flammrohrs (2) entspricht, und eine zweite Position, die der Versorgungsphase der Kammer (7) entspricht;
- mindestens eine Eintrittsöffnung (20A, 20B) des Detonationsgemischs in der Seitenwand (5) des Flammrohrs (2);
**dadurch gekennzeichnet, dass**:
- der Motor (I) einen Außenmantel (3) um das Flammrohr (2) aufweist, der einen peripheren Ringraum (4) entlang der Seitenwand (5) des Flammrohrs (2) bildet, der das Abfließen des Luftstroms, der von dem Lufteinlass des Motors kommt, erlaubt;
- stationäre Abflussführungen (11, 12, 13, 14) in dem peripheren Ringraum (4) angeordnet sind, um Abflusskanäle (10) in diesem Raum zu definieren; und
- mindestens ein beweglicher Klotz (25), der in dem Ringraum (4) angeordnet und mit dem beweglichen Grund (18) verbunden ist, vorgesehen ist, um sich entlang der Seitenwand (5) des Flammrohrs (2) zu verlagern, wobei der bewegliche Klotz (25), wenn der bewegliche Boden (18) die zweite Position belegt, einen der Abflusskanäle (10) verschließen kann, um einen Teil des Luftstroms in Richtung der Eintrittsöffnung (20A) zu lenken und den Abflusskanal (10) freizugeben, wenn der Grund (18) in der ersten Position ist.

2. Motor nach Anspruch 1,
**dadurch gekennzeichnet, dass** die stationären Führungen (11, 12, 13, 14) zueinander konzentrisch parallel um die Seitenwand (5) des Flammrohrs (2) angeordnet sind.

3. Motor nach einem der Ansprüche 1 oder 2,
**dadurch gekennzeichnet, dass** die Verlagerung des beweglichen Klotzes (25) ein seitliches Gleiten entlang der Seitenwand (5) des Flammrohrs (2) ist.

4. Motor nach einem der Ansprüche 1 bis 3, **dadurch gekennzeichnet, dass** der bewegliche Klotz (25) die Außenseite der Enden gegenüber von zwei benachbarten stationären Führungen (13, 14) erreicht, so dass er den Abflusskanal (10) verschließt, der zum Teil von diesen zwei stationären Führungen gebildet wird, wenn der bewegliche Boden (18) die zweite Position einnimmt.

5. Motor nach einem der Ansprüche 1 bis 4, **dadurch gekennzeichnet, dass**:
- der bewegliche Boden (18), der zwischen der ersten und der zweiten Position gleitet, die Form eines Kolbens (21) mit Querwand (22) aufweist, die zu der Kammer (7) gerichtet ist und mit Seitenschürze (23), die mit der Wand (5) des Flammrohrs (2) zusammenwirkt; und
- dass ein Kranz (23A), der mindestens eine Öffnung zum Versorgen (24) mit Detonationsgemisch aufweist, die auf seiner Seitenwand eingerichtet ist, fest mit der Querwand (22) des Kolbens (21) verbunden ist und mit der Seitenwand (5) des Flammrohrs (2) zusammenwirkt, um die Eintrittsöffnung (20A, 20B) in der zweiten Position des beweglichen Bodens (18) zumindest teilweise zu verschließen.

6. Motor nach einem der Ansprüche 1 bis 5,
**dadurch gekennzeichnet, dass**:
- mindestens eine erste Eintrittsöffnung (20A), die eine Abflussöffnung mit gleich bleibendem Querschnitt aufweist, in der ersten Position des beweglichen Bodens (18) verschlossen und in der zweiten Position des Bodens (18) freigegeben ist; und
- mindestens eine zweite Eintrittöffnung (20B), die einen beweglichen Vorsprung (29) aufnehmen kann, eine Abflussöffnung (35) mit variablem Querschnitt aufweist, wobei die Öffnung (35) in der ersten Position des beweglichen Bodens (18) einen verringerten Querschnitt aufweist, und einen vergrößerten Querschnitt in der zweiten Position des Bodens (18).

7. Motor nach einem der Ansprüche 1 bis 6, **dadurch gekennzeichnet, dass** er mindestens ein Vordetonationsrohr (6) aufweist, das in Bezug zu der Brennkammer (7) zumindest in etwa entlang dieser seitlich angeordnet ist.

8. Motor nach Anspruch 7, wenn er von Anspruch 6 abhängt,
**dadurch gekennzeichnet, dass**:
- ein beweglicher Vorsprung (29) in die zweite Öffnung (20B) eingefügt ist;
- der bewegliche Vorsprung (29) die Innenseite der Enden einer der stationären Führungen erreicht, wenn der bewegliche Boden (18) die erste Position belegt, so dass eine Querpassage gebildet wird, die das Vordetonationsrohr (6) und die Brennkammer (7) in Fluidkommunikation versetzt, um insbesondere den Transfer der Schubwellen zu erlauben; und
- eines der Enden der Querpassage der Abflussöffnung (35) der zweiten Eintrittsöffnung (20B), die einen verringerten Querschnitt aufweist, entspricht, wenn der bewegliche Boden (18) die erste Position belegt, und das andere Ende der stromaufwärtigen Öffnung (9), die zu dem Lufteinlass ausgerichtet ist, des Vordetonationsrohrs (6) entspricht.

9. Motor nach einem der Ansprüche 1 bis 8, **dadurch gekennzeichnet, dass** er eine Vielzahl, die mindestens gleich zwei ist, von Vordetonationsröhren (6) in seitlichen Positionen, die diametral der Brennkammer (7) entgegengesetzt sind, aufweist.

10. Motor nach einem der Ansprüche 1 bis 9, **dadurch gekennzeichnet, dass** mindestens eine der stationären Führungen (13) die Form einer Gabel (16) mit Zinken (15) aufweist, die zu dem Lufteinlass ausgerichtet sind.

11. Motor nach einem der Ansprüche 1 bis 10, **dadurch gekennzeichnet, dass** elastische Rückholmittel in dem Flammrohr (2) vorgesehen sind, um den beweglichen Boden (18) von der ersten Position zu der zweiten Position zurückzuführen.

12. Motor nach Anspruch 11,
**dadurch gekennzeichnet, dass** die elastischen Rückholmittel mindestens eine Feder (32) aufweisen, die auf die Querwand (22) des Bodens (18) einwirkt.
